# EUROPEAN PATENT SPECIFICATION

(11) **EP 2 924 581 B1**
(45) Date of publication and mention of the grant of the patent: **04.09.2019**
(21) Application number: 14161278.8
(22) Date of filing: 24.03.2014
(51) Int. Cl.: G06F 11/34

(54) **Method, server and agent for monitoring user interaction patterns**
Verfahren, Server und Mittel zur Überwachung von Benutzerinteraktionsmustern
Procédé, serveur et agent destiné à la surveillance des modèles d'interaction utilisateur

(43) Date of publication of application: 30.09.2015
(73) Proprietor: Pingdom AB, 722 13 Västeras (SE)
(72) Inventor: Sundqvist, Morgan, 722 10 Västerås (SE); Nurmi, Sam, 722 11 Västerås (SE)
(74) Representative: AWA Sweden AB

(56) References cited:
- WO-A2-2004/097643
- US-A1- 2009 183 143
- US-A1- 2011 029 665
- US-A1- 2012 011 439
- US-B1- 7 072 800
- US-B1- 8 032 866

## Description

### Technical field of the invention

The present invention relates to method performed by an analysis server for monitoring user interaction patterns in client applications interfacing a server. The present invention further relates to an analysis server for performing the method. The present invention further relates to an agent executing on a client computing device for identifying and transferring analysis data to the analysis server.

### Background of the invention

Monitoring user interaction in a client application, e.g. a web browser rendering a web site, is used for several reasons. One reason is to, at an early stage, discover that an error has occurred in the client application, for example that a button or a drop down is no longer functioning properly. Such an error in the client application may change user interaction patterns of the client application. The monitoring may also be performed for statistics purposes.

Such a process of monitoring user interaction often involves complex and ever changing setup scenarios. New processes are implemented and deployed faster than ever. For every new process implemented or changed in the client application, monitoring has to be implemented to see that the new process function properly. This has historically been done by scripting the interaction pattern and letting an agent execute the script, simulating a real user using the client application. This approach is both resource heavy and complex since manual scripting has to be performed for each new process. It is also resource heavy to identify and define each new process. For each development of the client application, a new monitoring script may have to be added or an existing script may have to be altered.

US 20130067327 (IBM Corp) describes a solution for event pattern script recording in which user actions are recorded. The user may itself initiate the recording when interacting with the application. These scripts may later be used for comparison, such that anomalies may be discovered. The method described in this document is both resource heavy and complex and needs human interaction. Moreover, new scripts obviously have to be recorded when new processes are implemented.

Moreover, the client application may be connected to a server, and a user interaction may cause events of data traffic to be sent between the client application and the server. In such a setup, an error in the server may also change the user interaction patterns of the client application. A usual approach to monitoring user interactions has historically been done by analyzing the processing of the server in response to a user interaction. This approach still needs new monitoring scripts or analyzing scripts for each new implemented process. Further, many owners of a client application may not have access to the servers in case they use a hosted solution for the server.

Accordingly, there is a need for an improved way of monitoring user interaction patterns.

### Summary of the invention

In view of the above, an objective of the invention is to solve or at least reduce one or several of the drawbacks discussed above. Generally, the above objective is achieved by the attached independent patent claims.

According to a first aspect, the present invention is realized by a method performed by an analysis server for monitoring user interaction patterns in client applications interfacing a server and rendered on client computing devices. The method comprises the step of: receiving, from agents executing on the client computing devices, analysis data pertaining to sequences of user interactions with the client applications, and events of data traffic between the client applications and the server made in response to the user interactions, each user interaction and event of data traffic being associated with a user identifier of a user executing the user interaction.

The method further comprises forming groups from the analysis data by grouping each user interaction with any events of data traffic made in response to the user interaction, labeling each group with a group identifier based the user interaction and the any events of data traffic grouped in the group and associating each group with the user identifier being associated with the user interaction.

The method further comprises, for each user identifier in the analysis data: identifying patterns among the formed groups associated with the user identifier, each pattern comprising a sequence of the formed groups including at least a start group and an end group, the pattern corresponding to a sequence of user interactions, and labeling each pattern with a pattern identifier based on the group identifiers of the sequence of the groups of the pattern, and storing information pertaining to the identified patterns in a data storage means, the information comprising at least the pattern identifier of each pattern,

The method further comprises to, for each identified pattern identifier stored in the data storage means, calculating a normal state of the identified pattern identifier among the formed groups. The normal state is calculated based on the difference between two values. The first value is a number of unique user identifiers being associated with a group having the same group identifier as the start group of the pattern having the identified pattern identifier. The second value is a number of unique user identifiers being associated with a sequence of groups having the same group identifiers as the sequence of groups of the pattern having the identified pattern identifier.

By the term "client application" should, in the context of present specification, be understood a web browser, a smart client, an app, a thin client, or any other software based application executed on a client computing device such as a desktop computer, a laptop computer, a smart phone, a tablet computer, a smart watch etc.

By the term "server" should, in the context of present specification, be understood any type of server, such as a web server, a local service acting as a server which saves content such as web pages or images, e-mails etc. locally (i.e. a service running on the client computing device), a remote cache server such as a dedicated network server, etc.

By the term "data traffic" should, in the context of present specification, be understood any type of data traffic, using any type of protocol or format such as HTTP, TCP, JSON, WebSocket etc.

By the term "agents executing on the client computing devices" should, in the context of present specification, be understood for example a client side script, or any other software application which can identify user interactions and events of data traffic to and from the client application and further transmit this data to a remote server such as an analysis server for monitoring user interaction patterns.

By the term "analysis data" should, in the context of present specification, be understood data from all client computing devices, having an agent installed or running, which at the time is running the client application. It may be noted that the data may be received continuously from the agent(s), wherein in analysis server continuously forms groups from the received data, and wherein the formed groups and stored on the analysis server, e.g. in RAM or on disk (or in a database coupled to the analysis server) until one of the following conditions are fulfilled. According to one embodiment, the condition comprises that a fixed number groups have been formed. According to other embodiments, the condition comprise that groups a formed during a certain time frame such as an hour, a minute, a day or any other suitable time frame. According to further embodiments, the condition comprises that the byte size of the stored formed groups has exceeded a threshold byte size. The remaining steps of the inventive method are then performed when one of the conditions are fulfilled.

An advantage of storing the formed groups on disk is that a sliding window approach may be employed when identifying patterns among the formed groups. This means that for any new group formed and stored, the previously stored groups, among which patterns have already been identified, may be used for identifying patterns again, this time with the new group included and with for example the first group among the previously stored groups removed. The stored groups may thus be viewed upon as a first-in-first-out (FIFO) queue, which is used continuously for identifying patterns.

The term "user interaction" should be understood to encompass any type of user interaction with a client application such as a click on a button, a selection in a drop down, checking or un-checking a check box, clicking a link selecting a menu item, etc.

It may be noted that a group from the analysis data may comprise one or several user interactions performed by the same user, i.e. associated with the same user identifier, and any events of data traffic sent to and from the server that is associated with the one or several user interactions.

By the term "sequence of user interactions" should, in the context of present specification, be understood that a pattern comprises a first group comprising a user interaction and at least a second group comprising a subsequent user interaction, wherein the at least two user interactions are performed by the same user. This will be further exemplified in the detailed description of this specification.

By the term "user identifier" should, in the context of present specification, be understood any type of identifier indentifying a specific user. The user identifier may be unique on a session basis, or based on the specific client computer, for example the IP number of the client computer or a MAC address of the network card. It may further be possible to use a license of the client software, or to query a license manager on application startup for a software license or to query a specific user identification provision server/service for a unique user identifier. The user identifier may further be the same during a specific time frame for a client computer, or based on the login of the user using the client computer.

By the term "data storage means" should be understood any type of data storage means such as RAM or disk, or a database. The data storage means may be remote from the analysis server or locally present on the analysis server. A database may comprise a distributed database comprising several databases. The data storage means may comprise for example both a RAM and a database, or any other combination of the above mentioned.

The present invention is based on the understanding that by placing the agent on the client, for example by placing a simple script on a website, and sending all data pertaining to user interactions with the client application and events of data traffic between the client application and the server made in response to the user interaction to an analysis server, the configuration needed for performing user interaction monitoring may be substantially reduced. New processes do not have to be scripted or defined by a user. Instead such new processes will be automatically identified by the analysis server and further monitored.

Since the analysis server receives data associated with the user identifier, the server can track sequences of user interactions and store the sequences, and the associated events of data traffic, as a pattern. By grouping at least one user interaction and any traffic events associated therewith, and labeling the group by a group identifier based on (parts of) the analysis data pertaining to the grouped interaction and events, the group identifier can be used for finding other groups with the same group identifier across the analysis data, wherein the groups identified with the same group identifier may originate from a user interaction performed by different users. Consequently, the present invention provides for identifying user interactions performed by different users as "the same user interaction" when it comes to pattern monitoring.

The patterns that is identified from the groups from a specific user may thus in a similar way be considered as the same as a pattern identified from groups from another user, if the group identifiers of the groups of the pattern matches between the users.

It may be noted that the step of storing information pertaining to the identified patterns may comprise checking if a the pattern identifier of the identified pattern already exist in the data storage means, and only storing the information if the pattern identifier of the identified pattern does not exist in the data storage means.

After all the patterns has been identified and labeled by a pattern identifier, a normal state of the pattern across all the identified users among the formed groups can be calculated. Basically this is performed by comparing how many users that start a pattern with how many that finishes the pattern. The state may thus be defined as a percentage number. For example, the normal state of the sequence A-B is 33%, A and B representing two groups, the normal state of the sequence A-C is 20%. The remaining 47% may for example have ended the client application after the user interaction giving rise to group A. This means that if 100 persons are starting the pattern A-C, i.e. the number of unique user identifiers (100) being associated with a group having the same group identifier (e.g. "A") as the start group of a pattern having the identified pattern identifier (e.g. "A-C"), 20 of the users are finishing the pattern, i.e. a number of unique user identifiers (20) being associated with a sequence of groups (e.g. group A followed by group C) having the same group identifiers (e.g. "A", "C") as the sequence of groups (e.g. group A followed by group C) of the pattern having the identified pattern identifier (e.g. "A-C").This will be further explained in the detailed description of this application.

The present invention is advantageous since any new process implemented on the client application or the server will immediately give rise to new patterns being identified by the analysis server and given a normal state. No scripting or similar human interaction is necessary.

According to embodiments of the present invention, each user identifier comprises at least one user type. According to this embodiment the method further comprising the steps of for each identified pattern identifier stored in the data storage means and for each specific user type of the at least one user type, calculating a normal state of the identified pattern identifier for the specific user type among the formed groups. The normal state is based on a difference between two values. The first value is a number of unique user identifier comprising the specific user type and being associated with a group having the same group identifier as the start group of the pattern having the identified pattern identifier. The second value is a number of unique user identifiers comprising the specific user type and being associated with a sequence of groups having the same group identifiers as the sequence of groups of the pattern having the identified pattern identifier.

When monitoring user interactions, it may be interesting to monitor the interaction of a certain type of users. To facilitate this, each user identifier may comprise at least one user type which comprises information relating to the type of user. The user type may for example specify what type of web browser the user is using, what country and/or city the user is currently present in, or what internet service provider (ISP) the user uses etc. The normal state of a pattern for a specific user type is performed in the same way as for the overall normal state of a pattern, but only groups and patterns for users having the specific user type, i.e. Mozilla Firefox or Sweden, is used for calculating the normal state.

According to embodiments of the present invention, the method further comprises the step of grouping the identified patterns stored in the data storage means comprising more than two groups and having at least the same start group and end group. For each grouped pattern, the method further comprising the step labeling the grouped pattern with a pattern identifier based on the group identifiers of the sequence of the groups of the patterns grouped in the grouped pattern. The method further comprising the step of storing information pertaining to the grouped pattern in the data storage means, wherein the information comprises at least the pattern identifier of the grouped pattern. The normal state for the pattern identifier labeling the grouped pattern is then calculated by adding the normal states of the stored patterns grouped in the grouped pattern.

In a client application comprising many possible sequences of user interactions, it may be interesting to group certain identified patterns, which comprises at least the same start group and the same end group, into a grouped pattern for calculating and monitoring the normal state of a more general sequence of user interactions.

According to embodiments of the present invention, the method further comprises the step of, for each calculated normal state, storing the normal state for the corresponding pattern identifier and the corresponding pattern identifier in the data storage means. This means that the normal state of any normal state of an identified pattern identifier among the formed groups, and/or any normal state of an identified pattern identifier for the specific user type and/or any normal state for a pattern identifier labeling a grouped pattern may be stored in the data storage means. The stored normal states of any type of patterns (e.g. pattern identifier), may be used for statistics purposes, or for any other type of user interaction monitoring purposes.

According to embodiments of the present invention, the step of storing the pattern identifier labeling the grouped pattern and the normal state is only performed if at least one of the normal states of the stored patterns grouped in the grouped pattern is lower than a threshold level. According to this embodiment, only patterns having a low normal state, i.e. wherein for example it is unusual for a user to go from group D to group E before going to group T, it is much more common to go from group D to group B to group T, it may be interesting to group the two patterns to a grouped pattern, D-E|B-T, and monitor the normal state of this pattern, since the normal state of the unusual pattern D-E-T may fluctuate quickly if only a couple of more users perform that sequence of user interactions.

According to embodiments of the present invention, the method further comprises the steps of monitoring the change of the normal state of a pattern identifier over a time period, and generating an error condition in case the change of the normal state exceeds a threshold level.

The advantage of this embodiment is that the analysis server may detect changes in the normal state for a pattern, and generate an error condition which may be sent, for example, to a web site administrator or a support/quality department of the owners of the client application. The error condition may be used for ensuring that the client application is functioning correctly.

According to embodiments of the present invention, the method further comprises the steps of monitoring the change of the normal state for a specific user type of a pattern identifier over a time period, generating an error condition in case the change of the normal state exceeds a threshold level.

The advantage of this embodiment is that the analysis server may detect changes in the normal state for a pattern for a specific user type, and generate an error condition which may be sent, for example, to a web site administrator or a support/quality department of the owners of the client application. The error condition may be used for ensuring that the client application is functioning correctly.

According to embodiments of the present invention, the length of the time period is based on a number of user interactions with the client applications during that time period. Consequently, the method may be more robust to swift changes of the number of users that interacts with the client applications, for example during night time or during a big holiday.

According to embodiments of the present invention, the length of the time period is based on a time-limited change on the server. Consequently, the method may be more robust to for example a campaign on a web site, which may alter the normal states of the user interaction pattern for a short time period. In this case, the web site administrator may not want error conditions sent to her since the fluctuation of the normal states are expected.

According to embodiments of the present invention, each of the client applications can be interfacing a plurality of servers. Since the agent is only executing on the client computer device, the method is insensitive to the number of servers from which data traffic sent to and from each server needs to be monitored. The scalability and simplicity of the inventive method is thus greatly improved compared to if monitoring agents had to be present in each of the plurality of servers.

According to embodiments of the present invention, the client application is a web browser rendering a web site, and the group identifiers is based on a state of a web page on which the user interaction was performed.

By the term "state of a web page" should, in the context of present specification, be understood for example the content in an Ajax control on the web page, or the presently selected item in a drop down menu or any other possible state of the web page. The group identifier may be based on what condition the client application is in when the user interaction took place. Using a state of a web page, this may be achieved no matter what elements are building up the web page. According to some embodiments, the state of the web page may be the URL of the web page.

According to embodiments of the present invention, the labeling each group with a group identifier comprises removing client application session specific data from the events of data traffic and the corresponding user interaction and then labeling each group with a group identifier based on the remaining parts of the events of data traffic and the corresponding user interaction. According to embodiments, the analysis data is saved in a database or any other data storage means as defined above. By removing user specific and session specific data from the events of data traffic and data pertaining to the user interactions, the storing may be achieved faster and require less memory. Data that is removed may for example pertain to time stamps, unique ids of parts of data included in an event of data traffic, protocol specific data etc. Moreover, by removing user specific and session specific data from the events of data traffic and data pertaining to the user interactions before temporarily saving the data for later analysis (i.e. until one of the above discussed conditions are fulfilled) may require less memory and the saving may be more time efficient. Furthermore, the removing of user specific and session specific data from the events of data traffic and data pertaining to the user interactions may greatly simplify the grouping and identification of the groups.

In a second aspect, the present invention provides an analysis server for monitoring user interaction patterns in client applications interfacing a server and rendered on client computing devices.

The analysis server comprises a receiving unit adapted for receiving, from agents executing on the client computing devices, analysis data pertaining to sequences of user interactions with the client applications, and events of data traffic between the client applications and the server made in response to the user interactions, each user interaction and event of data traffic being associated with a user identifier of a user executing the user interaction.

The analysis server further comprises an event grouping unit an event grouping unit adapted for forming groups from the analysis data by grouping each user interaction with any events of data traffic made in response to the user interaction, labeling each group with a group identifier based the user interaction and the any events of data traffic grouped in the group and associating each group with the user identifier being associated with the user interaction.

The analysis server further comprises a pattern identifying unit adapted for, for each user identifier in the analysis data, identifying patterns among the formed groups associated with the user identifier, each pattern comprising a sequence of the formed groups including at least a start group and an end group, the pattern corresponding to a sequence of user interactions, and labeling each pattern with a pattern identifier based on the group identifiers of the sequence of the groups of the pattern, and for storing information pertaining to the identified patterns in a data storage means, the information comprising at least the pattern identifier of each pattern.

The analysis server further comprises a normal state calculation unit adapted for, for each identified pattern identifier stored in the data storage means, calculating a normal state of the identified pattern identifier among the formed groups. The normal state is based on the difference between a number of unique user identifiers being associated with a group having the same group identifier as the start group of the pattern having the identified pattern identifier, a number of unique user identifiers being associated with a sequence of groups having the same group identifiers as the sequence of groups of the pattern having the identified pattern identifier.

It may be noted that the units described above may be implemented in a single software executed on the analysis server, for example by one or more processors in the server. The units may also be implemented in different connected software's executing on the analysis server. In that case, one or more of the above mentioned units may be implemented in a single software.

According to some embodiments, the analysis server comprises a computer-readable recording medium having recorded thereon one or more programs for implementing the method according to the first aspect of the present invention when executed on a device (e.g. the analysis server) having processing capabilities.

The second aspect may generally have the same features and advantages as the first aspect.

Other objectives, features and advantages of the present invention will appear from the following detailed disclosure, and from the drawings.

The invention is defined by the features laid down in the independent claims 1 and 14. Further enhancements are provided by the dependent claims.

### Brief description of the drawings

This and other aspects of the present invention will now be described in more detail, with reference to the appended drawings showing embodiments of the invention, wherein:
fig. 1 describes a system comprising an analysis server according to embodiments of the present invention,
fig. 2 is a block diagram describing an analysis server according to embodiments of the present invention,
fig. 3 is a flow chart describing a method for monitoring user interaction patterns according to embodiments of the present invention,
fig. 4 schematically describes user interactions with a web site,
fig. 5 describes patterns according to embodiments of the present invention,
fig. 6 schematically describes different time spans for monitoring a change of the normal state of a pattern,
fig. 7 is a block diagram describing an agent executing on a client computing device according to embodiments of the present invention.

As illustrated in the figures, the sizes of layers and regions are exaggerated for illustrative purposes and, thus, are provided to illustrate the general structures of embodiments of the present invention. Like reference numerals refer to like elements throughout.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

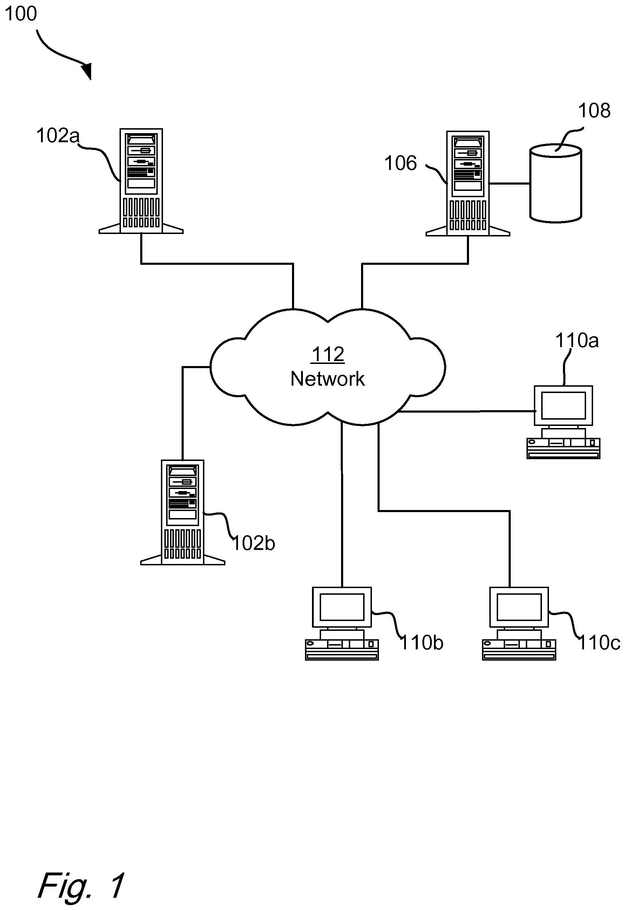

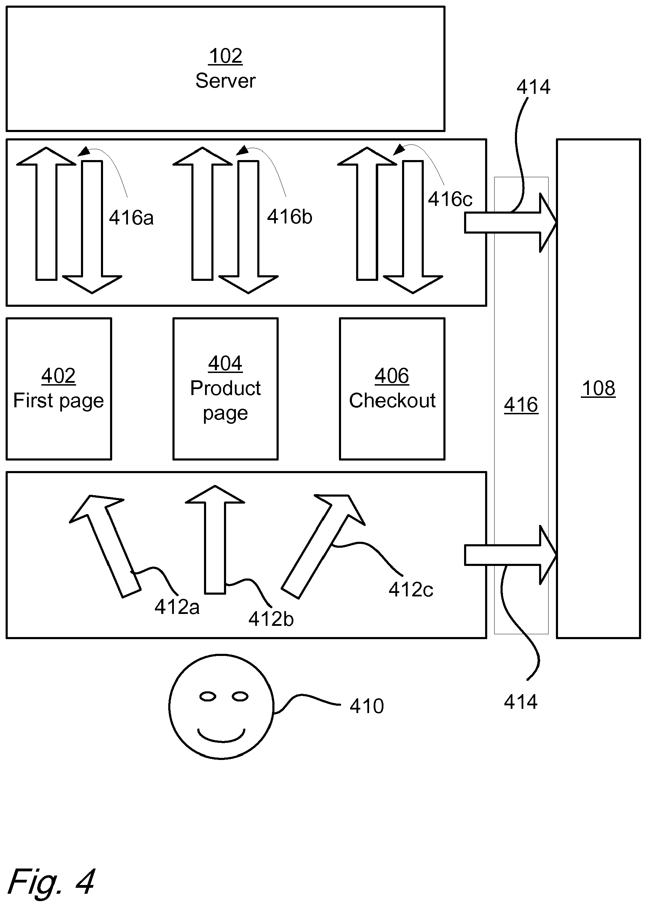

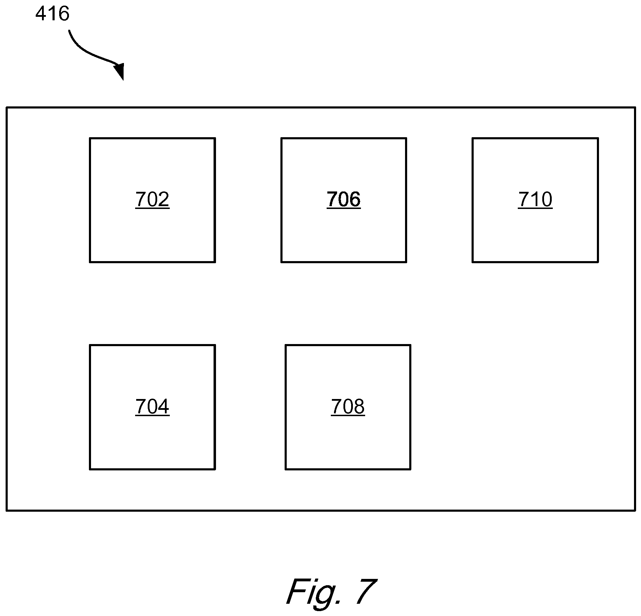

Figure 1 show by way of example a system 100 wherein user interaction patterns in client applications interfacing a server 102a-b and rendered on client computing devices 110a-c are monitored. The system 100 comprises an analysis server 106 connected to a data storage means 108, in this example a database 108 but may as well be a hard drive or a RAM or a combination thereof, for storing at least pattern identifiers and a corresponding normal state for the pattern identifier. In this embodiment, the analysis server 106 and the database 108 are separate devices, but in other embodiments, the analysis server comprises the database 108. In the exemplary system of figure 1, three client computing devices 110a-c are connected to the two servers 102a-b and the analysis server 106 via a network 112, for example the internet or a intranet. Each of the client computing devices 110a-c renders a client application which interfaces the servers 102a-b. Each of the client computing devices 110a-c further comprises an agent which identifies user interaction with the client application on the client computing device 110a-c and events of data traffic between the client applications and the two servers 102a-b made in response to the user interactions and sends data pertaining therewith to the analysis server 106. The function of the agent will be further described below in conjunction with figure 4 and figure 7.

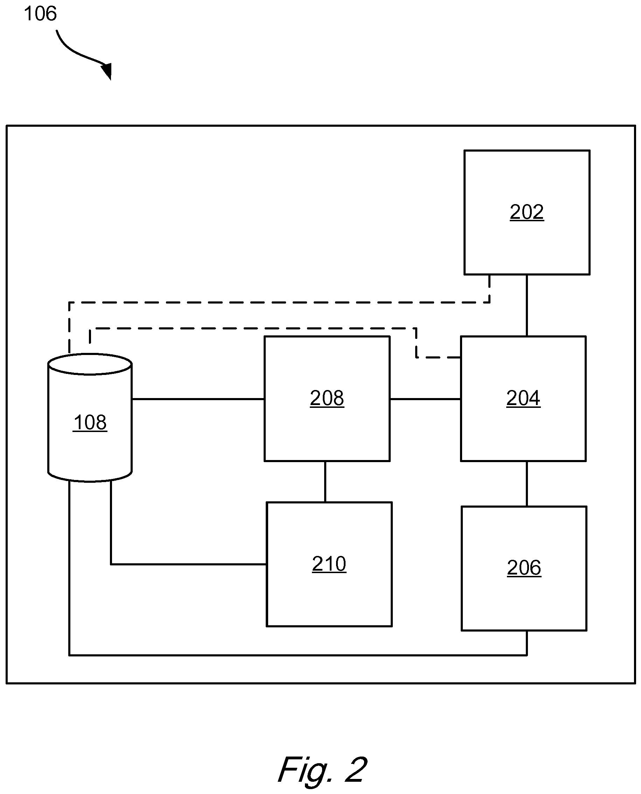

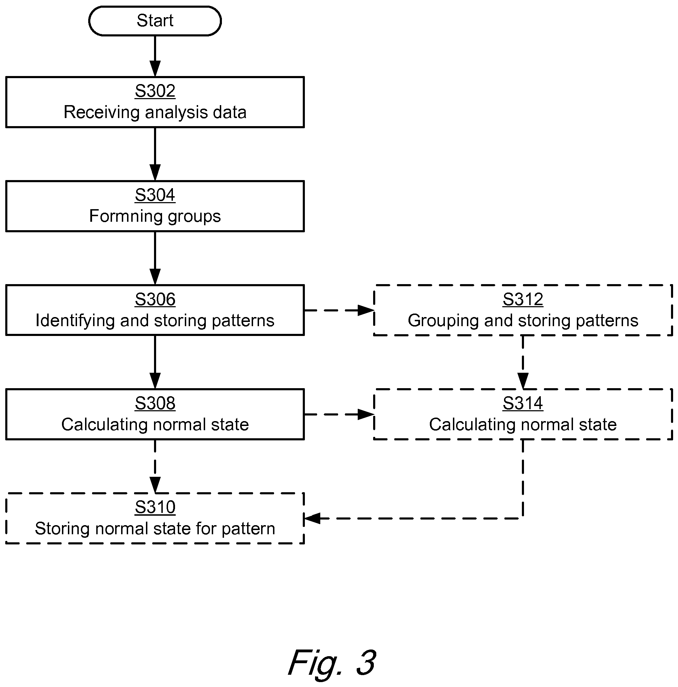

A method performed by an analysis server performed for monitoring user interaction patterns in client applications interfacing a server and rendered on client computing devices and components of such an analysis server 106 will now be described in conjunction with figure 2 and 3. The analysis server 106 comprises a receiving unit 202 which is adapted for receiving S302, from agents executing on the client computing devices, analysis data pertaining to sequences of user interactions with the client applications, and events of data traffic between the client applications and the server made in response to the user interactions. Each user interaction and events of data traffic made in response to the user interaction is associated with a user identifier of the user performing the user interaction. The analysis server may according to some embodiments comprise a temporary data storage means (not shown) for storing the continuously received analysis data from the agent(s), for later use, e.g. for verification of normal states of patterns. The temporary database may be located in the analysis server 106 or located remotely, in a separate device, and coupled to the analysis server. Moreover, according to some embodiments, the received analysis data is (also) stored in a more permanent data storage means, for example a data storage means 108, for later use in the analysis process, for example for verification of monitoring results, or for use if further information regarding the analysis data is needed.

The analysis server 202 further comprises an event grouping unit 204 adapted for forming groups S304 from the analysis data by grouping each event of data traffic associated with the user identifier with a corresponding user interaction, and labeling each group with a group identifier based on the events of data traffic and the corresponding user interaction. The event grouping unit is further associating each group with the user identifier being associated with the user interaction. The event grouping unit 204 receives the analysis data from the receiving unit 202 continuously as described above.

According to some embodiments, when grouping each event of data traffic associated with the user identifier with a corresponding user interaction, client application session specific data is removed from the events of data traffic and the corresponding user interaction. This means for example, if the user interaction takes place in an e-shop, where the user puts a certain article in a virtual shopping cart, the user interaction being the user clicking the "buy"-button, the client application session specific data may be the id of the product, the time stamp of the buy-click, the color of the product etc. In this example, the only thing that may be interesting is that the user clicked a "buy"-button on for example the women jacket page, and that the events of data comprises information regarding that the cart now includes an item.

As can be seen in figure 2, the event grouping unit 204 may optionally be coupled to the data storage means 108, for storing the formed groups. The event grouping unit may according to some embodiments further store the "cleaned" user interactions and events of data traffic according to the above in the data storage means 108. This requires less space in the data storage, compared to storing the full interactions and data traffic. The event grouping unit 204 labels each group with a group identification, for example a hash-value of the user interaction and the data traffic in the group, or a hash value of the cleaned user interactions and events of data traffic according to the above. The group identifier thus reflects the state of the client application when the user interaction(s) in a group was made. In the e-shop example above, the group identifier may reflect, and be based on, for example the URL of the women jacket-page. In case the e-shop is based on for example Ajax-controls, which means that many or all "pages" in the e-shop has the same URL, the group identifier may reflect, and be based on, the state of the Ajax-control in which the supply of women jackets where presented. The event grouping unit will also associate each group with the user identifier being associated with the user interaction(s) of the group.

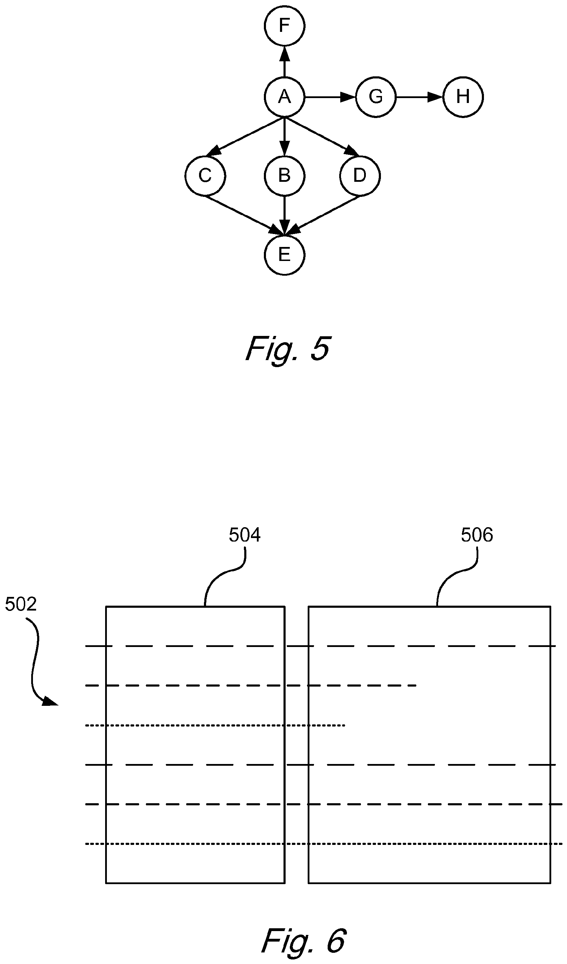

The analysis server 106 further comprises a pattern identifying unit 206 adapted for, for each user identifier in the analysis data, identifying patterns S306 among the formed groups associated with the user identifier, from the event grouping unit 204. Each pattern comprises a sequence of the formed groups. Each pattern includes at least a start group and an end group such that the pattern corresponds to a sequence of user interactions. The forming of pattern will be further discussed in conjunction with figure 5. The pattern identifying unit 206 labels each pattern with a pattern identifier based on the group identifiers of the sequence of groups of the pattern. The pattern identifier may for example be a list of the group identifiers of the groups which the pattern comprises. This may be advantageous since the groups in the pattern may be easily back-tracked from the pattern identifier. According to embodiments, the pattern identifying unit 206 is also coupled to the data storage means 108, for storing (S306) the identified patterns. The information stored for each pattern comprising at least the pattern identifier of each pattern. If the pattern identifier is built up according to above, the groups of the pattern having the pattern identifier is easily back tracked.

The analysis server further comprises a normal state calculation unit, 208, adapted for, for each identified pattern identifier stored in the data storage means 108, calculating a normal state S308 of the identified pattern identifier among the formed groups. The calculation of normal state will be further discussed in conjunction with figure 5 but the calculation is based on both information which may be received from the event grouping unit 204 and from the pattern identifying unit 206. The normal state calculation unit 208 may thus be connected to the event grouping unit 204 and from the pattern identifying unit 206. In other embodiments, the normal state calculation unit 208 may extract the needed data for calculating a normal state from the database 108.

The analysis server may according to embodiments further comprise a pattern storing unit 210 adapted for, for each pattern identifier, storing S310 the pattern identifier and the corresponding normal state for the pattern identifier in the data storage means 108.

Figure 3 further describes optional steps S312, S314 of the method performed by the analysis server 106 which now will be explained in conjunction with figure 5. According to some embodiments, the method further comprises the step of grouping the identified patterns S312 comprising more than two groups and having at least the same start group and end group. In figure 5, three patterns or sequences of groups, which are labeled A-H in figure 5, comprises more than 2 groups and have the same start group and end group. These are the patterns A-C-E, A-B-E and A-D-E. According to some embodiments, these three patterns may be grouped into one grouped pattern, A-C|B|D-E, wherein the notation C|B|E describes that any of the groups C, B, D may be the middle group in the grouped pattern. This grouped pattern may be labeled with a pattern identifier based on the group identifiers of the start group and the end group, possibly with some addition that is based on the possible middle groups C, B, D.

The calculation of normal states of a pattern will now be described with use of table 1.

**Table 1**

| Pattern | Group 1 | Group 2 | Group 3 (if any) | Normal state |
|---|---|---|---|---|
| A-B-E | A, 5000 | B, 100 | E, 90 | 1.8% |
| A-C-E | A, 5000 | C, 1000 | E, 700 | 14% |
| A-D-E | A, 5000 | D, 50 | E, 50 | 1% |
| A-G-H | A, 5000 | G, 500 | H, 300 | 6% |
| A-F | A, 5000 | F, 1000 | - | 20% |

The first column states the pattern; each of the patterns in figure 5 has one row in table 1. As can be seen in table 1, each pattern start with group A. The values under "Group 1" thus describes, for each pattern, a number of unique user identifiers being associated with a group having the same group identifier (e.g. "A") as the start group of the pattern having the identified pattern identifier. The value of the last group in the pattern consequently corresponds to a number of unique user identifiers being associated with a sequence of groups having the same group identifiers as the sequence of groups of the pattern having the identified pattern identifier. Consequently, 5000 users (user identifiers) have started the pattern A-C-E (pattern identifier). Out of these 5000 user identifiers, 100 has continued to group C, and 90 of the 100 has finished the patterns by continuing to group E. The normal state of pattern A-C-E is thus 90/5000 = 1.8 %. Similar, 5000 users (user identifiers) has started the pattern A-B-E. Out of these 5000 user identifiers, 1000 has continued to group B, and 700 of the 1000 has finished the patterns by continuing to group E. The normal state of pattern A-C-E is thus 700/5000 = 14 %. The normal state for the pattern A-D-E (1%), A-G-H (6%) and A-F (20%) are calculated in the same way.

The normal state of the grouped pattern discussed above, A-C|B|D-E is calculated by adding the normal states of the patterns grouped in the grouped pattern. The normal state of the grouped pattern A-C|B|D-E is thus 1.8 + 14 + 1 = 16.8%.

According to some embodiments, the grouped pattern and the normal state of the grouped pattern are only stored if at least one of the normal states of the stored patterns grouped in the grouped pattern is lower than a threshold level. Consequently, in the above example, if the threshold level is >1%, the (identifier for the) grouped pattern A-C|B|D-E and the normal state will be stored, but if the threshold level is below 1 %, the storing will not be performed.

According to some embodiments, all but one of the normal states in a grouped pattern must fall below the threshold level for the storing to be performed. In the above case, if the threshold level is for example 1.5%, the grouped pattern A-C|B|D-E will not be stored. According to some embodiments, when this happens, A-D-E (below the threshold level) may be grouped with A-B-E or A-C-E and then stored.

According to some embodiments, only patterns (grouped or regular) with a normal state above a threshold level will be stored and thus monitored. The owner of the client application may for example only be interested to monitor the normal state of a certain number of patterns. According to other embodiments, only the top number of patterns, i.e. with the highest normal states, will be stored.

According to some embodiments, each user identifier comprises at least one user type. User interaction patterns may thus be monitored for user on a specific user type level. For example, if the owner of an e-shop is worried that users browsing the e-shop using Mozilla Firefox may experience problems of paying for the products, the owner may want to monitor user interaction patterns for the user type "Mozilla Firefox". Table 2 describes the same thing as table 1, but only for users with the user type "Mozilla Firefox". In other words, the values under "Group 1" in Table 2 thus describes, for each pattern, a number of unique user identifier comprising the specific user type (e.g. "Mozilla Firefox") and being associated with a group having the same group identifier (e.g. "A") as the start group of the pattern having the identified pattern identifier. The value of the last group in the pattern consequently corresponds to a number of unique user identifiers comprising the specific user type and being associated with a sequence of groups having the same group identifiers as the sequence of groups of the pattern having the identified pattern identifier.

**Table 2**

| Pattern | Group 1 | Group 2 | Group 3 (if any) | Normal state |
|---|---|---|---|---|
| A-B-E | A, 1000 | B, 20 | E, 10 | 1% |
| A-C-E | A, 1000 | C, 100 | E, 70 | 14% |
| A-D-E | A, 1000 | D, 40 | E, 10 | 1% |
| A-G-H | A, 1000 | G, 500 | H, 300 | 30% |
| A-F | A, 1000 | F, 10 | - | 1% |

From the above, the owner of the web site may for example find out that only 1 % of the users complete the pattern, A-F compared to 20% in the overall case in Table 1, but instead 30% of the Firefox-users complete the pattern A-G-H instead of 6% in the overall case in Table 1. The A-F may as an example correspond to the paying of a product while A-G-H corresponds to reading the help pages. It may be noted that the above discussed regarding grouping patterns and filtering the patterns before storing them may be equally valid for the user interaction patterns on a user type level.

The monitoring of user interaction patterns may be done in order to make sure that the client application works as it should, which may mean that the normal state of the user interaction patterns stays pretty much the same from day to day. For this reason, according to some embodiments, the change of the normal state for a pattern (identifier) over a time period may be monitored. If the normal state exceeds a threshold level, an error condition may be generated, and sent or presented to for example the owner of the client application or similar. This deviation analysis for the normal states may occur over different types of time frames. The time frame may be fixed, an hour, a day etc. The time frame may also be dynamic and the length may be based on the amount of usage of the client application. This is illustrated in figure 6. Each of the dotted lines 502 represents analysis data received from an agent. The number of dots on each line represents the occurrences of data received from each agent. Lots of dots mean that lots of data is sent from the agent. The time frames are represented by the rectangles 504, 506. The width of the rectangle corresponds to the length of the time frame. As can be seen in figure 6, the first time frame 504 is shorter than the second time frame since, during the first time frame 504, all six agents send data to the analysis server. During the second time frame, one of the busiest agent stop reporting use of the client application for which it reports data. A second agent also stops reporting usage of its client application. Consequently, during the second time frame 506, usage of the client applications drops, and the second time frame 506 is thus longer.

It may be noted that figure 6 and the above text describing figure 6 is a very simplified version of the reality to simplify the description of the concept deciding the length of time frames. In a real implementation, a time frame 504, 506 may comprise thousands of agents reporting data, and generally a specific agent is not reporting data during an entire time frame.

It may be further be noted that the content of figure 6 may also be used for describing the time frame used by the analysis server for collecting analysis data and forming groups before identifying patterns and calculating a normal state for each pattern.

The components and functionality of an agent executing on a client computing device, wherein the client computing device is rendering a client application interfacing a server, and wherein the agent is remotely coupled to an analysis server for monitoring user interaction patterns will now be described in conjunction with figure 4 and 6. Figure 4 shows by way of example user interactions 412a-c with a web site (client application). The web site is interfacing a server 102. An agent 416 (also shown in figure 6) is sending analysis data 414 to the remotely coupled analysis server 108. The analysis data pertains to user interactions 412a-c and events of data traffic 416a-c between the web site and the server 102 made in response to the user interactions 412a-c. A user 410 is interacting with the web site. She first enters the first page 402, user interaction 412a. The agent 416 comprises means 702 for identifying the user interaction 412a with the client application. The agent further comprises means 704 for identifying a user session for the identified user interaction, and means 708 for associating the user interaction 412a with a user identifier based on the identified user session. Consequently, the agent 416 has identified the user session and will associate all info about the user interactions with the user identifier (during this session) before transferring 414 the data to the analysis server 108.

The user interaction 412a causes events of data traffic 416a between the web site the server 102 made in response to the user interactions 412a to occur. The agent 416 further comprises means 706 for identifying events of data traffic 416a between the client application and the server 102 made in response to the user interaction 412a, and means 708 for associating the identified events of data traffic 416a between the client application and the server 102 made in response to the user interaction 412a with the user identifier. Consequently, the agent 416 will associate all info about the identified events of data traffic with the user identifier (during the session described in figure 4) before transferring the data to the analysis server 108.

The agent 414 further comprises means 710 for transferring analysis data 414 comprising the identified user interaction 412a and the identified events of data traffic 416a to the analysis server 108.

The user 410 continues to interact 412b-c with the web site, and the user interaction causes events of data traffic 416b-c between the web site the server 102 made in response to the user interactions 412b-c to occur. The agent will identify these interactions 412b-c and events of data traffic 416b-c and transfer analysis data 414 comprising the identified user interaction 412b-c and the identified events of data traffic 416b-c to the analysis server 108 in the same manner as described above.

## Claims

1. A method performed by an analysis server (106) for monitoring user interaction patterns in client applications interfacing a server (102a-b) and rendered on client computing devices (110a-c), the method comprising the steps of:
receiving (S302), from agents (416) executing on the client computing devices (110a-c), analysis data (414) pertaining to sequences of user interactions (412a-c) with the client applications, and events of data traffic (416a-c) between the client applications (110a-c) and the server (102a-b) made in response to the user interactions (412a-c), each user interaction (412a-c) and event of data traffic (416a-c) being associated with a user identifier of a user executing the user interaction,
forming groups (S304) from the analysis data (414) by grouping each user interaction (412a-c) with any events of data traffic (416a-c) made in response to the user interaction (412a-c), labeling each group with a group identifier based on user interaction (412a-c) and the any events of data traffic (416a-c) grouped in the group and associating each group with the user identifier being associated with the user interaction (412a-c)
for each user identifier in the analysis data:
identifying patterns (S306) among the formed groups associated with the user identifier, each pattern comprising a sequence of the formed groups including at least a start group and an end group, the pattern corresponding to a sequence of user interactions (412a-c) performed by a same user such that a pattern comprises a first group comprising a user interaction and at least a second group comprising a subsequent user interaction, and labeling each pattern with a pattern identifier based on the group identifiers of the sequence of the groups of the pattern, and
storing information (S306) pertaining to the identified patterns in a data storage means (108), the information comprising at least the pattern identifier of each pattern,
for each identified pattern identifier stored in the data storage means (108):
calculating a normal state (S308) of the identified pattern identifier among the formed groups based on a difference between
a number of unique user identifiers being associated with a group having the same group identifier as the start group of the pattern having the identified pattern identifier, and
a number of unique user identifiers being associated with each group in a sequence of groups having the same group identifiers as the sequence of groups of the pattern having the identified pattern identifier,
monitoring a change of the normal state of a pattern identifier over a time period,
and generating an error condition in case the change of the normal state exceeds a threshold level.

2. The method according to claim 1, wherein each user identifier comprises at least one user type, wherein the method further comprising the steps of
for each identified pattern identifier stored in the data storage means (108),
for each specific user type of the at least one user type,
calculating a normal state (S308) of the identified pattern identifier for the specific user type among the formed groups based on a difference between
a number of unique user identifier comprising the specific user type and being associated with a group having the same group identifier as the start group of the pattern having the identified pattern identifier, and
a number of unique user identifiers comprising the specific user type and being associated with a sequence of groups having the same group identifiers as the sequence of groups of the pattern having the identified pattern identifier.

3. The method according to any one of claims 1-2, further comprising the step of
grouping the identified patterns (S312) stored in the data storage means (108) comprising more than two groups and having at least the same start group and end group, and for each grouped pattern:
labeling the grouped pattern with a pattern identifier based on the group identifiers of the sequence of the groups of the patterns grouped in the grouped pattern,
storing information (S312) pertaining to the grouped pattern in the data storage means (108), the information comprising at least the pattern identifier of the grouped pattern
calculating a normal state (S314) for the pattern identifier labeling the grouped pattern by adding the normal states of the patterns grouped in the grouped pattern.

4. The method according to any one of claims 1-3, wherein the method further comprising the step of:
for each calculated normal state, storing (S310) the normal state for the corresponding pattern identifier and the corresponding pattern identifier in the data storage means (108).

5. The method according to claim 4 when being dependent on claim 3, wherein the step of storing the pattern identifier labeling the grouped pattern and the normal state is only performed if at least one of the normal states of the stored patterns grouped in the grouped pattern is lower than a threshold level.

6. The method according to claim 2 or any one of claims 3-5 when being dependent on claim 2, wherein the method further comprising the steps of
monitoring the change of the normal state for a specific user type of a pattern identifier over a time period,
generating an error condition in case the change of the normal state exceeds a threshold level.

7. The method according to claim 6, wherein the length of the time period is based on a number of user interactions with the client applications during that time period.

8. The method according to claim 6, wherein the length of the time period is based on a time-limited change on the server.

9. The method according to any of the claims 1-8, wherein each of the client applications are interfacing a plurality of servers.

10. The method according to any of the claims 1-9, wherein the client application is a web browser rendering a web site, and wherein the group identifiers is based on a state of a web page on which the user interaction was performed.

11. The method according to claim 10, wherein at least some of the group identifiers are based on a URL of a web page on which the user interaction was performed.

12. The method according to any of the claims 1-11, wherein the labeling each group with a group identifier comprises removing client application session specific data from the events of data traffic and the corresponding user interaction and then labeling each group with a group identifier based on the remaining parts of the events of data traffic and the corresponding user interaction.

13. An analysis server (106) for monitoring user interaction patterns in client applications interfacing a server (102a-b) and rendered on client computing devices(110a-c), the analysis server (106) comprising:
a receiving unit (202) adapted for receiving (S302), from agents (416) executing on the client computing devices (110a-c), analysis data (414) pertaining to sequences of user interactions (412a-c) with the client applications (110a-c), and events of data traffic (416a-c) between the client applications (110a-c) and the server (102a-b) made in response to the user interactions (412a-c), each user interaction (412a-c) and event of data traffic (416a-c) being associated with a user identifier of a user executing the user interaction,
an event grouping unit (204) adapted for forming groups (S304) from the analysis data (414) by grouping each user interaction (412a-c) with any events of data traffic (416a-c) made in response to the user interaction (412a-c), labeling each group with a group identifier based the user interaction (412a-c) and the any events of data traffic (416a-c) grouped in the group and associating each group with the user identifier being associated with the user interaction (412a-c)
a pattern identifying unit (206) adapted for, for each user identifier in the analysis data, identifying patterns (S306) among the formed groups associated with the user identifier, each pattern comprising a sequence of the formed groups including at least a start group and an end group, the pattern corresponding to a sequence of user interactions (412a-c) performed by a same user such that a pattern comprises a first group comprising a user interaction and at least a second group comprising a subsequent user interaction, and labeling each pattern with a pattern identifier based on the group identifiers of the sequence of the groups of the pattern, and for storing information pertaining to the identified patterns in a data storage means (108), the information comprising at least the pattern identifier of each pattern,
a normal state calculation unit (208) adapted for, for each identified pattern identifier stored in the data storage means (108), calculating a normal state (S308) of the identified pattern identifier among the formed groups by based on a difference between
a number of unique user identifiers being associated with a group having the same group identifier as the start group of the pattern having the identified pattern identifier,
a number of unique user identifiers being associated with each group in a sequence of groups having the same group identifiers as the sequence of groups of the pattern having the identified pattern identifier,
monitoring a change of the normal state of a pattern identifier over a time period, and
generating an error condition in case the change of the normal state exceeds a threshold level.

## Patentansprüche

1. Verfahren, das von einem Analyseserver (106) zum Überwachen von Benutzerinteraktionsmustern in Clientanwendungen, die in Schnittstellenverbindung mit einem Server (102a-b) stehen und auf Client-Rechenvorrichtungen (110a-c) gerendert werden, durchgeführt wird, wobei das Verfahren die Schritte umfasst:
Empfangen (S302), von Agenten (416), die auf den Client-Rechenvorrichtungen (110a-c) ausführen, von Analysedaten (414), die sich auf Sequenzen von Benutzerinteraktionen (412a-c) mit den Clientanwendungen, und Ereignisse von Datenverkehr (416a-c) zwischen den Clientanwendungen (110a-c) und dem Server (102a-b), die in Reaktion auf die Benutzerinteraktionen (412a-c) durchgeführt werden, beziehen, wobei jede Benutzerinteraktion (412a-c) und jedes Ereignis von Datenverkehr (416a-c) einer Benutzerkennung eines Benutzers zugeordnet wird, der die Benutzerinteraktion ausführt, Bilden von Gruppen (S304) aus den Analysedaten (414) durch Gruppieren jeder Benutzerinteraktion (412a-c) mit jedwedem Ereignis von Datenverkehr (416a-c), das in Reaktion auf die Benutzerinteraktion (412a-c) erfolgte, Kennzeichnen jeder Gruppe mit einer Gruppenkennung basierend auf Benutzerinteraktion (412a-c) und der jedweden Ereignisse von Datenverkehr (416a-c), die in der Gruppe gruppiert sind, und Zuordnen jeder Gruppe zu der Benutzerkennung, die der Benutzerinteraktion (412a-c) zugeordnet ist
für jede Benutzerkennung in den Analysedaten:
Identifizieren von Mustern (S306) unter den gebildeten Gruppen, die der Benutzerkennung zugeordnet sind, wobei jedes Muster eine Sequenz der gebildeten Gruppen umfasst, einschließlich mindestens einer Startgruppe und einer Endgruppe, wobei das Muster einer Sequenz von Benutzerinteraktionen (412a-c) entspricht, die von einem gleichen Benutzer durchgeführt werden, derart, dass ein Muster eine erste Gruppe umfasst, die eine Benutzerinteraktion umfasst, und mindestens eine zweite Gruppe, die eine darauffolgende Benutzerinterkation umfasst, und Kennzeichnen jedes Musters mit einer Musterkennung basierend auf den Gruppenkennungen der Sequenz der Gruppen des Musters, und
Speichern von Informationen (S306), die sich auf die identifizierten Muster beziehen, in einem Datenspeichermittel (108), wobei die Informationen mindestens die Musterkennung jedes Musters umfassen,
für jede identifizierte Musterkennung, die in dem Datenspeichermittel (108) gespeichert ist:
Berechnen eines Normalzustandes (S308) der identifizierten Musterkennung unter den gebildeten Gruppen basierend auf einer Differenz zwischen einer Anzahl von eindeutigen Benutzerkennungen, die einer Gruppe mit der gleichen Gruppenkennung zugeordnet sind, als die Startgruppe des Musters mit der identifizierten Musterkennung, und
eine Anzahl von eindeutigen Benutzerkennungen, die jeder Gruppe in einer Sequenz von Gruppen mit den gleichen Gruppenkennungen zugeordnet sind, wie die Sequenz der Gruppen des Musters mit der identifizierten Musterkennung, Überwachen einer Veränderung des Normalzustandes einer Musterkennung über einen Zeitraum,
und Erzeugen einer Fehlerbedingung im Fall, dass die Veränderung des Normalzustandes einen Schwellenwert überschreitet.

2. Verfahren nach Anspruch 1, wobei jede Benutzerkennung mindestens einen Benutzertyp umfasst, wobei das Verfahren ferner die Schritte umfasst, für jede identifizierte Musterkennung, die in den Datenspeichermitteln (108) gespeichert ist, für jeden spezifischen Benutzertyp des mindestens einen Benutzertyps,
Berechnen eines Normalzustandes (S308) der identifizierten Musterkennung für den spezifischen Benutzertyp unter den gebildeten Gruppen basierend auf einer Differenz zwischen
einer Anzahl eindeutiger Benutzerkennungen, die den spezifischen Benutzertyp umfassen und einer Gruppe mit der gleichen Gruppenkennung zugeordnet sind, als die Startgruppe des Musters mit der identifizierten Musterkennung, und
eine Anzahl eindeutiger Benutzerkennungen, die den spezifischen Benutzertyp umfassen und einer Sequenz von Gruppen mit den gleichen Gruppenkennungen, wie die Sequenz der Gruppen des Musters mit der identifizierten Musterkennung, zugeordnet sind.

3. Verfahren nach einem der Ansprüche 1 bis 2, ferner umfassend den Schritt
Gruppieren der identifizierten Muster (S312), die in dem Datenspeichermittel (108) gespeichert sind, die mehr als zwei Gruppen umfassen und mindestens die gleiche Startgruppe und Endgruppe aufweisen, und für jedes gruppierte Muster:
Kennzeichnen des gruppierten Musters mit einer Musterkennung basierend auf den Gruppenkennungen der Sequenz der Gruppen der Muster, die in dem gruppierten Muster gruppiert sind,
Speichern von Informationen (S312), die sich auf das gruppierte Muster in dem Datenspeichermittel (108) beziehen, wobei die Informationen mindestens die Musterkennung der gruppierten Muster umfassen Berechnen eines Normalzustands (S314) für die Musterkennung, die das gruppierte Muster **kennzeichnet, durch** Addieren der Normalzustände der Muster, die in dem gruppierten Muster gruppiert sind.

4. Verfahren nach einem der Ansprüche 1 bis 3, wobei das Verfahren ferner den Schritt umfasst:
für jeden berechneten Normalzustand, Speichern (S310) des Normalzustands für die entsprechende Musterkennung und die entsprechende Musterkennung in dem Datenspeichermittel (108).

5. Verfahren nach Anspruch 4, wenn unabhängig von Anspruch 3, wobei der Schritt des Speicherns der Musterkennung, die das gruppierte Muster und den Normalzustand kennzeichnet, nur durchgeführt wird, wenn mindestens einer der Normalzustände der gespeicherten Muster, die in dem gruppierten Muster gruppiert sind, niedriger ist als ein Schwellenwert.

6. Verfahren nach Anspruch 2 oder einem der Ansprüche 3 bis 5, wenn unabhängig von Anspruch 2, wobei das Verfahren ferner die Schritte umfasst Überwachen der Veränderung des Normalzustandes für einen spezifischen Benutzertyp einer Musterkennung über einen Zeitraum,
Erzeugen einer Fehlerbedingung im Fall, dass die Veränderung des Normalzustandes einen Schwellenwert überschreitet.

7. Verfahren nach Anspruch 6, wobei die Länge des Zeitraums auf einer Anzahl von Benutzerinteraktionen mit den Clientanwendungen während dieses Zeitraums basiert.

8. Verfahren nach Anspruch 6, wobei die Länge des Zeitraums auf einer zeitbegrenzten Veränderung auf dem Server basiert.

9. Verfahren nach einem der Ansprüche 1 bis 8, wobei jede der Clientanwendungen in Schnittstellenverbindung mit einer Vielzahl von Servern steht.

10. Verfahren nach einem der Ansprüche 1 bis 9, wobei die Clientanwendung ein Webbrowser ist, der eine Website rendert, und wobei die Gruppenkennungen auf einem Zustand einer Webseite basieren, auf der die Benutzerinteraktion durchgeführt wurde.

11. Verfahren nach Anspruch 10, wobei mindestens manche der Gruppenkennungen auf einer URL einer Webseite basieren, auf der die Benutzerinteraktion durchgeführt wurde.

12. Verfahren nach einem der Ansprüche 1 bis 11, wobei das Kennzeichnen jeder Gruppe mit einer Gruppenkennung Entfernen von Clientanwendung-sitzungsspezifischen Daten aus den Ereignissen des Datenverkehrs und der entsprechenden Benutzerinteraktion umfasst und dann Kennzeichnen jeder Gruppe mit einer Gruppenkennung basierend auf den verbleibenden Teilen der Ereignisse des Datenverkehrs und der entsprechenden Benutzerinteraktion.

13. Analyseserver (106) zum Überwachen von Benutzerinteraktionsmustern in Clientanwendungen, die in Schnittstellenverbindung mit einem Server (102a-b) stehen und auf Client-Rechenvorrichtungen (110a-c) gerendert werden, wobei der Analyseserver (106) umfasst:
eine Empfangseinheit (202), die zum Empfangen (S302), von Agenten (416), die auf den Clientrechenvorrichtungen (110a-c) ausgeführt werden, von Analysedaten (414) ausgelegt ist, die sich auf Sequenzen von Benutzerinteraktionen (412a-c) mit den Clientanwendungen (110a-c) und Ereignisse von Datenverkehr (416a-c) zwischen den Clientanwendungen (110a-c) und dem Server (102a-b), die in Reaktion auf die Benutzerinteraktionen (412a-c) erfolgen, beziehen, wobei jede Benutzerinteraktion (412a-c) und jedes Ereignis von Datenverkehr (416a-c) einer Benutzerkennung eines Benutzers zugeordnet ist, der die Benutzerinteraktion ausführt,
eine Ereignisgruppierungseinheit (204), die ausgelegt ist zum Bilden von Gruppen (S304) aus den Analysedaten (414) durch Gruppieren jeder Benutzerinteraktion (412a-c) mit jedweden Ereignissen von Datenverkehr (416a-c), die in Reaktion auf die Benutzerinteraktion (412a-c) erfolgen, jede Gruppe mit einer Gruppenkennung basierend auf der Benutzerinteraktion (412a-c) und den jedweden Ereignissen von Datenverkehr (416a-c), die in der Gruppe gruppiert sind, zu kennzeichnen und jede Gruppe zu der Benutzerkennung, die der Benutzerinteraktion (412a-c) zugeordnet ist, zuzuordnen,
eine Musteridentifizierungseinheit (206), die ausgelegt ist, für jede Benutzerkennung in den Analysedaten, Muster (S306) unter den gebildeten Gruppen, die der Benutzerkennung zugeordnet sind, zu identifizieren, wobei jedes Muster eine Sequenz der gebildeten Gruppen umfasst, einschließlich mindestens einer Startgruppe und einer Endgruppe, wobei das Muster, das einer Sequenz der Benutzerinteraktionen (412a-c) entspricht, das von einem gleichen Benutzer durchgeführt wird, derart, dass ein Muster eine erste Gruppe umfasst, die eine Benutzerinteraktion umfasst, und mindestens eine zweite Gruppe, die eine nachfolgende Benutzerinteraktion umfasst, und Kennzeichnen jedes Musters mit einer Musterkennung basierend auf den Gruppenkennungen der Sequenz der Gruppen des Musters, und zum Speichern von Informationen, die sich auf die identifizierten Muster in einem Datenspeichermittel (108) beziehen, wobei die Informationen mindestens die Musterkennung jedes Musters umfassen, eine Normalzustandsberechnungseinheit (208), die ausgelegt ist, für jede identifizierte Musterkennung, die in dem Datenspeichermittel (108) gespeichert ist, einen Normalzustand (S308) der identifizierten Musterkennung unter den gebildeten Gruppen basierend auf einer Differenz zwischen
einer Anzahl eindeutiger Benutzerkennungen, die einer Gruppe mit der gleichen Gruppenkennung zugeordnet sind, wie die Startgruppe des Musters mit der identifizierten Musterkennung,
einer Anzahl eindeutiger Benutzerkennungen, die jeder Gruppe in einer Sequenz von Gruppen mit den gleichen Gruppenkennungen wie die Sequenz von Gruppen des Musters mit der identifizierten Musterkennung zugeordnet sind, zu berechnen,
Überwachen einer Veränderung des Normalzustandes einer Musterkennung über einen Zeitraum, und
Erzeugen einer Fehlerbedingung im Fall, dass die Veränderung des Normalzustandes einen Schwellenwert überschreitet.

## Revendications

1. Procédé effectué par un serveur d'analyse (106) pour surveiller des modèles d'interaction d'utilisateur dans des applications client s'interfaçant avec un serveur (102a-b) et restituées sur des dispositifs informatiques clients (110a-c), le procédé comprenant les étapes consistant à:
recevoir (S302), depuis des agents (416) s'exécutant sur le dispositif informatique client (110a-c), des données d'analyse (414) se rapportant aux séquences d'interaction d'utilisateur (412a-c) avec les applications client, et des événements de trafic de données (416a-c) entre les applications client (110a-c) et le serveur (102a-b) et en réponse aux interactions d'utilisateur (412a-c), chaque interaction d'utilisateur (412a-c) et événement de trafic de données (416a-c) étant associé à un identifiant d'utilisateur d'un utilisateur exécutant une interaction d'utilisateur,
former des groupes (S304) d'après des données d'analyse (414) en groupant chaque interaction d'utilisateur (412a-c) avec n'importe quel événement de trafic de données (416a-c) fait en réponse à l'interaction d'utilisateur (412a-c), étiqueter chaque groupe avec un identifiant de groupe sur la base de l'interaction d'utilisateur (412a-c) et de n'importe quel événement de trafic de données (416a-c) groupé dans le groupe et associer chaque groupe avec l'identifiant d'utilisateur étant associé à l'interaction d'utilisateur (412a-c), pour chaque identifiant d'utilisateur dans les données d'analyse:
identifier des modèles (S306) parmi les groupes formés associés à l'identifiant d'utilisateur, chaque modèle comprenant une séquence des groupes formés incluant au moins un groupe de début et un groupe de fin, le modèle correspondant à une séquence d'interaction d'utilisateur (412a-c) effectué par un utilisateur de sorte qu'un modèle comprenne un premier groupe comprenant une interaction d'utilisateur et au moins un second groupe comprenant une interaction d'utilisateur suivante, et étiqueter chaque modèle avec un identifiant de modèle basé sur les identifiants de groupe de la séquence de groupe du modèle, et
mémoriser une information (S306) se rapportant au modèle identifié dans un moyen de mémorisation de données (108), l'information comprenant au moins un identifiant de modèle de chaque modèle,
pour chaque identifiant de modèle identifié mémorisé dans le moyen de mémorisation de données (108):
calculer un état normal (S308) de l'identifiant de modèle identifié parmi les groupes formés sur la base d'une différence entre
un nombre d'identifiants d'utilisateur unique étant associé à un groupe ayant le même identifiant de groupe que le groupe de début du modèle ayant l'identifiant de modèle identifié, et
un nombre d'identifiants d'utilisateur unique étant associé à chaque groupe dans une séquence de groupe ayant le même identifiant de groupe que la séquence de groupes du modèle ayant l'identifiant de modèle identifié,
surveiller un changement de l'état normal d'un identifiant de modèle sur une période temporelle,
et générer une condition d'erreur au cas ou le changement de l'état normal excède un niveau de seuil.

2. Procédé selon la revendication 1, dans lequel chaque identifiant d'utilisateur comprend au moins un type d'utilisateur, dans lequel le procédé comprend en outre les étapes consistant à
pour chaque identifiant de modèle identifié mémorisé dans le moyen de mémorisation de données (108),
pour chaque type d'utilisateur spécifique d'au moins un type d'utilisateur, calculer un état normal (S308) de l'identifiant de modèle identifié parmi les groupes formés sur la base d'une différence entre
un nombre d'identifiants d'utilisateur unique étant associé à un groupe ayant le même identifiant de groupe que le groupe de débuts du modèle ayant l'identifiant de modèle identifié, et
un nombre d'identifiants d'utilisateur unique étant associé à chaque groupe dans une séquence de groupe ayant le même identifiant de groupe que la séquence de groupes du modèle ayant l'identifiant de modèle identifié.

3. Procédé selon une quelconque des revendications 1-2 , comprenant en outre l'étape consistant à:
grouper les modèles identifiés (S312) mémorisés dans le moyen de mémorisation de données (108) comprenant plus de deux groupes ayant au moins un groupe de début et un groupe de fin, et pour chaque modèle groupé:
étiqueter le modèle groupé avec un identifiant de modèle sur la base des identifiants de groupe de la séquence de groupe des modèles groupés dans le modèle groupé,
mémoriser une information (S312) se rapportant au modèle groupé dans le moyen de mémorisation de données (108), l'information comprenant au moins un identifiant de modèle du modèle groupé,
calculer un état normal (S314) pour l'identifiant de modèle étiquetant le modèle groupé en additionnant les états normaux des modèles groupés dans le modèle groupé.

4. Procédé selon une quelconque des revendications 1-3, dans lequel le procédé comprend en outre l'étape consistant à:
pour chaque état normal calculé, mémoriser (S310) l'état normal pour l'identifiant de modèle correspondant et l'identifiant de modèle correspondant dans le moyen de mémorisation de données (108).

5. Procédé selon la revendication 4 en dépendance de la revendication 3, dans lequel l'étape de mémorisation de l'identifiant de modèle étiquetant le modèle groupé et l'état normal est seulement effectué si au moins un des états normaux des modèles mémorisés groupés dans le modèle groupé est plus bas qu'un niveau de seuil.

6. Procédé selon la revendication 2 ou une quelconque des revendications 3-5 en dépendance de la revendication 2, dans lequel le procédé comprend en outre les étapes consistant à:
surveiller le changement de l'état normal pour un utilisateur spécifique d'un identifiant de modèle sur une période temporelle,
générer une condition d'erreur au cas où le changement de l'état normal excède un niveau de seuil.

7. Procédé selon la revendication 6, dans lequel la longueur de la période temporelle est basée sur un nombre d'interactions d'utilisateur avec les applications clients pendant cette période temporelle.

8. Procédé selon la revendication 6, dans lequel la longueur de la période temporelle est basée sur un changement limité dans le temps sur le serveur.

9. Procédé selon une quelconque des revendications 1-8, dans lequel chacune des applications clients s'interface avec une pluralité de serveurs.

10. Procédé selon une quelconque des revendications 1-9, dans lequel l'application client est un navigateur Web restituant un site Web et dans lequel les identifiant de groupes sont basés sur un état d'une page Web sur laquelle les interactions d'utilisateur sont effectuées.

11. Procédé selon la revendication 10, dans lequel au moins certains des identifiant de groupe sont basés sur un URL d'une page Web sur laquelle l'interaction d'utilisateur a été effectuée.

12. Procédé selon une quelconque des revendications 1-11, dans lequel l'étiquetage de chaque groupe avec un identifiant de groupe comprend de supprimer de données spécifiques de session d'application client des événements de trafic de données et de l'interaction d'utilisateur correspondante et ensuite étiqueter chaque groupe avec un identifiant de groupe sur la base des parties restantes des événements de trafic de données et l'interaction d'utilisateur correspondante.

13. Serveur d'analyse (106) pour surveiller des modèles d'interaction d'utilisateur dans des applications client s'interfaçant avec un serveur (102a-b) et restituées sur des dispositifs informatiques clients (110a-c), le serveur d'analyse (106) comprenant:
une unité de réception (202) adaptée pour recevoir (S302), depuis des agents (416) s'exécutant sur le dispositif informatique client (110a-c), des données d'analyse (414) se rapportant aux séquences d'interaction d'utilisateur (412a-c) avec les applications client (110a-c), et des événements de trafic de données (416a-c) entre les applications client (110a-c) et le serveur (102a-b) et en réponse aux interactions d'utilisateur (412a-c), chaque interaction d'utilisateur (412a-c) et événements de trafic de données (416a-c) étant associé à un identifiant d'utilisateur d'un utilisateur exécutant une interaction d'utilisateur,
une unité de groupage d'événements (204) adaptée pour former des groupes (S304) d'après des données d'analyse (414) en groupant chaque interaction d'utilisateur (412a-c) avec n'importe quel événement de trafic de données (416a-c) fait en réponse à l'interaction d'utilisateur (412a-c), étiqueter chaque groupe avec un identifiant de groupe sur la base de l'interaction d'utilisateur (412a-c) et de n'importe quel événement de trafic de données (416a-c) groupé dans le groupe et associer chaque groupe avec l'identifiant d'utilisateur étant associé à l'interaction d'utilisateur (412a-c),
une unité d'identification de modèle (206) adaptée pour, pour chaque identifiant d'utilisateur dans les données d'analyse, identifier des modèles (S306) parmi les groupes formés associés à l'identifiant d'utilisateur, chaque modèle comprenant une séquence des groupes formés incluant au moins un groupe de début et un groupe de fin, le modèle correspondant à une séquence d'interaction d'utilisateur (412a-c) effectuée par un utilisateur de sorte qu'un modèle comprenne un premier groupe comprenant une interaction d'utilisateur et au moins un second groupe comprenant une interaction d'utilisateur suivante, et étiqueter chaque modèle avec un identifiant de modèle basé sur les identifiant de groupe de la séquence de groupe du modèle, et pour mémoriser une information se rapportant au modèle identifié dans un moyen de mémorisation de données (108), l'information comprenant au moins identifiant de modèle de chaque modèle, une unité de calcul d'état normal (208) adaptée pour, pour chaque identifiant de modèle identifié mémorisé dans le moyen de mémorisation de données (108),calculer un état normal (S308) de l'identifiant de modèle identifié parmi les groupes formés sur la base d'une différence entre
un nombre d'identifiants d'utilisateur unique étant associé à un groupe ayant le même identifiant de groupe que le groupe de début du modèle ayant l'identifiant de modèle identifié, et
un nombre d'identifiants d'utilisateur unique étant associé à chaque groupe dans une séquence de groupe ayant le même identifiant de groupe que la séquence de groupes du modèle ayant l'identifiant de modèle identifié,
surveiller un changement de l'état normal d'un identifiant de modèle sur une période temporelle, et
générer une condition d'erreur au cas ou le changement de l'état normal excède un niveau de seuil.
